# EUROPÄISCHE PATENTSCHRIFT

(11) **EP 1 281 427 B1**
(45) Veröffentlichungstag und Bekanntmachung des Hinweises auf die Patenterteilung: **26.04.2006**
(21) Anmeldenummer: 01119865.2
(22) Anmeldetag: 16.08.2001
(51) Int. Cl.: B01D 39/20, B01D 29/00, B01D 33/00, B01D 39/00

(54) **Filtermedium sowie Verfahren zu dessen Herstellung und Verwendung**
Filter medium, manufacturing method and use
Materiau filtrant, son fabrication et utilisation

(30) Priorität: 02.08.2001 EP 01118703
(43) Veröffentlichungstag der Anmeldung: 05.02.2003
(73) Patentinhaber: Sefar AG, 8803 Rüschlikon (CH)
(72) Erfinder: Goldoni, Sandro, CH-8942 Oberrieden (CH); Maurer, Christoph, CH-8001 Zürich (CH); Müller, Hans Rudolph, CH-8038 Zürich (CH)
(74) Vertreter: Wunderlich, Rainer

(56) Entgegenhaltungen:
- US-A- 4 225 642
- US-A- 4 698 157
- US-A- 5 688 347
- DATABASE WPI Section Ch, Week 198808 Derwent Publications Ltd., London, GB; Class F09, AN 1988-052593 XP002182720 & JP 63 007814 A (IBIDEN CO LTD), 13. Januar 1988 (1988-01-13)

## Beschreibung

Die Erfindung betrifft ein Filtermedium für die kuchenbildende Filtration gemäß dem Oberbegriff des Anspruchs 1. Weiter betrifft die Erfindung ein Verfahren zur Herstellung eines derartigen Filtermediums sowie ein Verfahren zur kuchenbildenden Filtration mit diesem Filtermedium.

Bei einem gattungsgemäßen Filtermedium zur kuchenbildenden Filtration ist zumindest eine Seite, welche zum Anlagern eines Filterkuchens vorgesehen ist, mit einer weitgehend glatten Oberfläche versehen. Es sind verschiedene Verfahren zur Herstellung derartiger Filtermedien bekannt, wobei das Filtermedium mit zumindest einer glatten Oberfläche gefertigt wird, welche zum Anlagern des Filterkuchens vorgesehen ist. Beispielsweise kann ein Filtermedium als eine Membran mit einer glatten Oberfläche hergestellt werden, oder es wird zunächst ein Filtertuch gewebt, welches anschließend durch Kalandrieren geglättet wird.

Derartige Filtermedien werden bei den Filtrationsverfahren zur kuchenbildenden Filtration eingesetzt. Aufgrund einer anliegenden Druckdifferenz durchströmt eine Suspension das Filtermedium, wobei sich Feststoffpatrtikel als ein sogenannter Filterkuchen an dem Filtermedium anlagern. Mit zunehmender Schichtdicke des Filterkuchens nimmt die Filterleistung ab. Es ist daher erforderlich, den Filterkuchen kontinuierlich oder diskontinuierlich in bestimmten Zeitabständen von den Filtermedium zu entfernen, um eine hohe Filterleistung beizubehalten.

Um eine möglichst gute Filterkuchenablösung von dem Filtermedium zu erreichen, geht man seit vielen Jahrzehnten den Weg, die Oberfläche des Filtermediums möglichst glatt auszubilden. Hierdurch soll eine möglichst leichte Kuchenabnahme sowie das Verhindern von Kuchenrückständen auf dem Filtermedium ereicht werden.

Bekannt ist beispielsweise die Herstellung sehr feiner Gewebe mit Feinporen von bis zu unter zehn Mikrometer. Derartige feine Gewebe werden sehr stark kalandriert, dass heißt, durch sogenannte Kalanderwalzen glattgewalzt. Weiter ist es bekannt, textile Gewebe mit einer permeablen Beschichtung zu versehen, um eine ganz glatte Oberfläche zu erreichen.

Der Erfindung liegt die **Aufgabe** zugrunde, ein Filtermedium für die kuchenbildende Filtration, ein Verfahren zur Herstellung des Filtermediums sowie ein Verfahrens zur kuchenbildenden Filtration anzugeben, durch welche ein verbessertes Ablösen des Filterkuchens erreicht wird.

Die Aufgabe wird nach der Erfindung durch ein Filtermedium mit den Merkmalen des Anspruchs 1, durch ein Verfahren zur Herstellung des Filtermediums mit den Merkmalen des Anspruchs 6 bzw. durch ein Verfahren zur kuchenbildenden Filtration mit den Merkmalen des Anspruchs 11 gelöst. Bevorzugte Ausführungsformen der Erfindung sind in den jeweiligen abhängigen Ansprüchen angegeben.

Ausgehend von einem gattungsbildenden Filtermedium ist die Erfindung dadurch gekennzeichnet, dass die glatte Oberfläche nachträglich zum Bilden einer Mikrodrainage aufgerauht ist.

Die Erfindung basiert auf der überraschenden Erkenntnis, dass sich die Kuchenablösung eines Filtermediums verbessert, wenn eine zunächst sehr glatt ausgebildete Oberfläche des Filtermediums wieder in gewissem Umfang aufgerauht wird. Gegenüber ganz glatt ausgebildeten Oberflächen wurde bei den erfindungsgemäß hergestellten Filtermedien festgestellt, dass diese ein leichteres und auch rückstandfreieres Entfernen der Feststoffpartikel von dem Filtermedium ermöglichen.

Als eine mögliche Erklärung hierfür kann angesehen werden, dass aufgrund der Vanderwaalschen sowie weiterer physikalischer Kräfte relativ viel Flüssigkeit im Filterkuchen zurückgehalten wird. Die auf dem Filtermedium aufliegende Kuchenfläche passt sich dabei an die Filtermediumsoberfläche an. Ist die Oberfläche nun extrem glatt ausgebildet, liegen also zwei glatte Oberflächen übereinander. Die Adhäsion zwischen Filterkuchen und Filtermedium ist dementsprechend hoch, da hier wiederum große Spannungskräfte wirken, welche im wesentlichen auf Vanderwaalsche Kräfte sowie Kapilarkräfte zurückzuführen sind. Die physikalischen Eigenschaften der zwei aufeinander klebenden flachen Ebenen werden auch als sogennanter Spiegeleffekt bezeichnet. Werden zwei plane, angefeuchtete Glasscheiben aufeinander gelegt, können diese nur durch Voneinanderschieben mit zum Teil sehr hohen Kräften voneinander getrennt werden.

Durch das nachträgliche erfindunggemäße Aufrauhen der glatten oder flachen Oberfläche des Filtermediums wird dieser "Spiegeleffekt" vermieden. In der Oberfläche des Filtermediums ist eine Art Mikrodrainage vorgesehen, welche einen verbesserten Flüssigkeitsablauf ermöglicht und ein großflächiges Ausbilden des "Spiegeleffektes" verhindert.

Im Vergleich mit bisher bekannten Filtermedien mit glatten Oberflächen wurden mit erfindungsgemäß ausgebildeten Filtermedien bei verschiedensten Produkten deutlich bessere bis nahezu ideale Kuchenabwurfeigenschaften erzielt. Besonders drastische Verbesserungen ergaben sich bei der Filtration von sehr feinen, amorphen oder thixotropen Suspensionen.

Zusätzlich und ebenso überraschend wurde festgestellt, dass sich die Filtrationseigenschaften in Bezug auf Kapazität und Restfeuchtegehalt im Kuchen erheblich verbessert werden. Diese Eigenschaften sind wiederum auf die reduzierten Oberflächenspannungen zwischen dem Filtermedium einerseits uns dem Filterkuchen andererseits zurückzuführen.

Das Filtermedium kann nach der Erfindung sowohl ein textiles Gewebe, ein Flies, ein Filz oder eine Membran aufweisen. Es sind auch Kombinationen aus diesen flexiblen Filtermedien denkbar, beispielsweise Filtergewebe mit aufgebrachten Membranen aus mikroporösen Polymermassen.

Eine besonders vorteilhafte Ausführungsform der Erfindung besteht darin, dass ein Gewebe mit der glatten Gewebeoberfläche und einer Porengröße von unter 25 Mikrometern, insbesondere unter 10 Mikrometern vorgesehen ist. Gewebe sind als Filtermedien für die kuchenbildende Filtration besonders vorteilhaft, da diese robust, kostengünstig herstellbar und vielseitig einsetzbar sind.

Bei einer bevorzugt ausgestalteten Ausführungsform der Erfindung ist es vorgesehen, dass die Seite zum Bilden der glatten Oberfläche kalandriert ist. Das heißt, die zur Kuchenanlagerung vorgesehene Seite wurde vor dem erfindungsgemäßen Aufrauhen mittels Kalanderwalzen geglättet. Es hat sich erwiesen, dass erst diese glatte Ausgestaltung und die anschließend aufgebrachte Aufrauhung den hervorragenden Kuchenablösungseffekt ergibt.

Ein besonders robustes und feinporiges Filtermedium lässt sich nach der Erfindung dadurch herstellen, dass das Gewebe ein Doppellagengewebe ist.

Hinsichtlich des erfindungsgemäßen Verfahrens zur Herstellung eines Filtermediums, bei dem das Filtermedium mit zumindest einer weitgehend glatten Oberfläche gefertigt wird, welche zum Anlagern des Filterkuchens vorgesehen ist, ist die Erfindung dadurch gekennzeichnet, dass die glatte Oberfläche zum Bilden einer Mikrodrainage aufgerauht wird. Mit diesem Verfahren lässt sich ein Filtermedium gemäß den vorstehend genannten Vorteilen erreichen. Das Filtermedium mit der glatten Oberfläche kann dabei ein textiles Gewebe, ein Vlies, ein Filz, eine Membran oder ein anderes geeignetes Filtermedium sein.

Nach der Erfindung ist es besonders bevorzugt, dass als Filtermedium ein Gewebe verwendet wird und dass das Gewebe zum Bilden der glatten Gewebeoberfläche kalandriert wird. Das Kalandrieren der Gewebeoberfläche erfolgt dabei vor dem Aufbringen der Aufrauhung zum Ausbilden der Mikrodrainage.

Die Mikrodrainage weist dabei vorzugsweise eine Rauheitstiefe von einigen Mikrometern, insbesondere in einem Bereich von 10 Mikrometern bis 50 Mikrometern auf. Hierdurch wird auf der glatten Oberfläche ein Netz von Mikrokanälen erzeugt, welche den Aufbau von Oberflächenspannungen gemäß dem Spiegeleffekt behindern sowie ein gewisses Ablaufen einer Restflüssigkeit bei der Kuchenabnahme erlauben.

Ein besonders einfaches Aufbringen der definierten Auffrauhung der Oberfläche wird nach der Erfindung dadurch erreicht, dass das Aufrauhen durch mechanische Bearbeitung, insbesondere Beschleifen, Schaben oder Sandstrahlen erfolgt.

Eine noch definiertere Aufbringung der Mikrodrainage, welche selbst das Aufbringen von Mustern mit Längs-, Quer oder gekreuzten Streifen ermöglicht, wird nach der Erfindung dadurch erreicht, dass das Aufrauhen durch physikalische Bearbeitung, insbesondere durch Gammabestrahlung, Plasmabehandlung oder Laserapplikation erfolgt.

Eine weitere einfache und zuverlässige Möglichkeit des Aufbringens der Aufrauhung besteht nach der Erfindung darin, dass das Aufrauhen durch chemische Bearbeitung, insbesondere durch Ätzen oder Aufpfropfen erfolgt. Die Auswahl der chemischen Behandlungsmittel erfolgt dabei in Abstimmung auf das Material des Filtermediums. Das Filtermedium besteht beispielsweise bei Geweben aus monofilen oder multifilen Fäden aus hinlänglich bekannten Polymeren.

Schließlich betrifft die Erfindung auch ein Verfahren zur kuchenbildenden Filtration, bei dem ein Filterkuchen an einem Filtermedium angelagert und wieder entfernt wird, wobei dieses Verfahren dadurch gekennzeichnet ist, dass ein Filtermedium nach einem der Ansprüche 1 bis 5 verwendet bzw. das Filtermedium durch das vorgenannte Verfahren hergestellt ist.

Das erfindungsgemäße Filtrationsverfahren ist besonders vorteilhaft bei der Filtration von feinen, amorphen oder thixotropen Suspensionen. Das Entfernen des Filterkuchens kann durch Rakeleinrichtungen oder durch Abblasen von der Oberfläche des Filtermediums erfolgen.

Durch die Verwendung des erfindungsgemäßen Filtermediums kann ein besonders leichtes und nahezu rückstandfreies Ablösen des gebildeten Filterkuchens von dem Filtermedium erreicht werden. Dies erhöht die Ausbeute der Filtration, spart Energie und erhöht die Lebensdauer des Filtermediums.

Die Erfindung wird anhand eines bevorzugten Ausführungsbeispieles weiter erläutert, welches in den Abbildungen dargestellt ist.

Es zeigen
- Abb. 1: eine Mikroskopaufnahme eines Ausschnittes eines Filtergewebes mit kalandrierter Oberfläche und

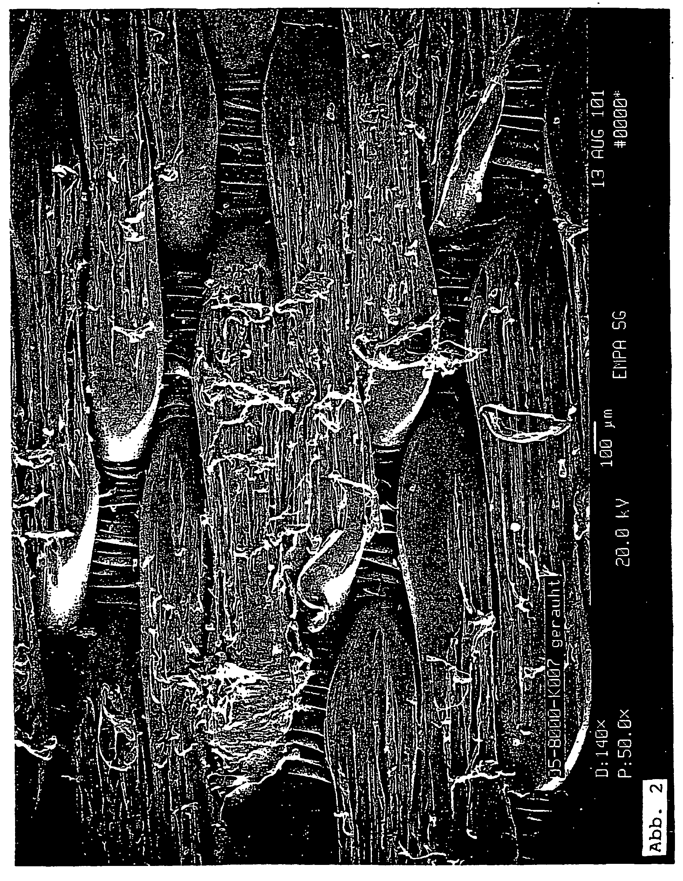

- Abb. 2: eine Mikroskopaufnahme des Filtergewebes von Abb. 1 nach Aufbringen der Mikrodrainage.

Das in den Abbildungen dargestellte Filtergewebe weist in Bildrichtung vertikal verlaufende Kettfäden und horizontal verlaufende Schussfäden auf. Bei diesem Ausführungsbeispiel sind die Kettfäden Multifilgarne und die Schussfäden Monofilgarne. Andere Garnkombinationen sind möglich.

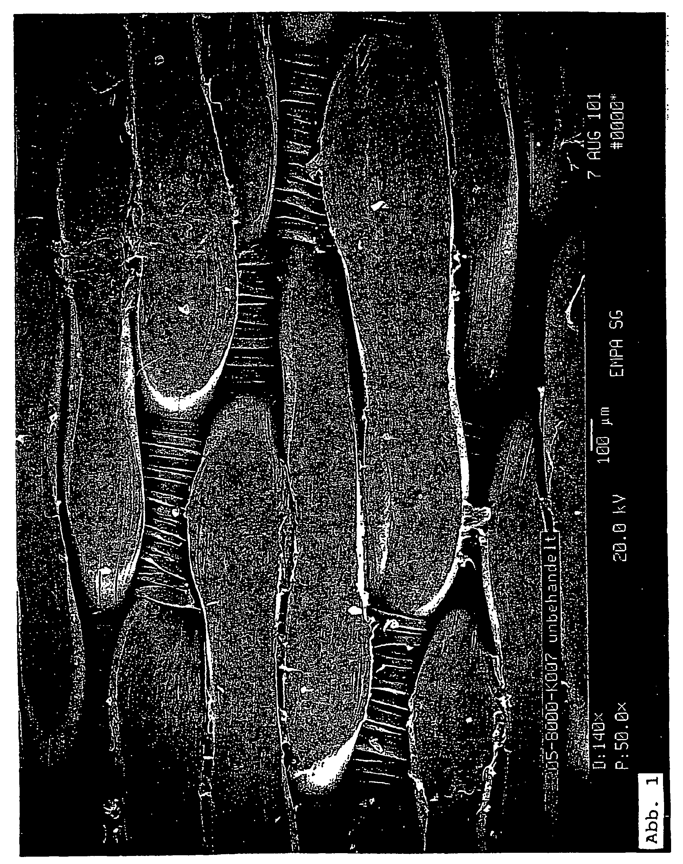

Das Filtermedium ist so gewebt; dass die Schussfäden die Kettfäden überragen. Zur Schaffung einer möglichst ebenen, glatten Oberfläche ist das Gewebe kalandriert, wobei Bereiche der vorstehenden Schussfäden plateauartig abgeflacht sind, wie Abb. 1 zeigt. Die sich ergebenden plateauartigen Abflachugnen weisen eine relativ ebene, glatte Oberfläche auf, so dass sich insgesamt eine weitgehend glatte Gesamtoberfläche ergibt.

Nach einer Erkenntnis der Erfindung kann sich an diesen Abflachungen ein sogenannter Spiegeleffekt ausbilden, welcher das Ablösen eines Filterkuchens erschwert.

Um dies zu verhindern, sind nach der Erfindung die plateauartigen Abflachungen der Garne, welche den wesentlichen Teil der Gewebeoberfläche bilden, mit einer Aufrauung versehen. Hierzu sind parallel zur Schussrichtung Rillen mit einer Breite und Höhe von einigen Mikrometern bis etwa 20 Mikrometern als eine Mikrodrainage in die plateauartigen Abflachungen eingebracht.

## Patentansprüche

1. Filtermedium für die kuchenbildende Filtration, wobei zumindest die Seite, welche zum Anlagern eines Filterkuchens vorgesehen ist, eine weitgehend glatte Oberfläche aufweist,
**dadurch gekennzeichnet,**
**dass** die glatte Oberfläche nachträglich zum Bilden einer Mikrodrainage aufgerauht ist.

2. Filtermedium nach Anspruch 1,
**dadurch gekennzeichnet,**
**dass** dieses ein textiles Gewebe, ein Vlies, ein Filz oder eine Membran aufweist.

3. Filtermedium nach Anspruch 1 oder 2,
**dadurch gekennzeichnet,**
**dass** ein Gewebe mit der glatten Oberfläche und einer Porengröße von unter 25 Mikrometern, insbesondere unter 10 Mikrometern, vorgesehen ist.

4. Filtermedium nach einem der Ansprüche 1 bis 3,
**dadurch gekennzeichnet,**
**dass** die Seite zum Bilden der glatten Oberfläche kalandriert ist.

5. Filtermedium nach einem der Ansprüche 1 bis 4,
**dadurch gekennzeichnet,**
**dass** das Gewebe ein Doppellagengewebe ist.

6. Verfahren zur Herstellung eines Filtermediums, insbesondere nach einem der Ansprüche 1 bis 5, bei dem das Filtermedium mit zumindest einer weitgehend glatten Oberfläche gefertigt wird, welche zum Anlagern des Filterkuchens vorgesehen ist,
**dadurch gekennzeichnet,**
**dass** die glatte Oberfläche zum Bilden einer Mikrodrainage aufgerauht wird.

7. Verfahren nach Anspruch 6,
**dadurch gekennzeichnet,**
**dass** als Filtermedium ein Gewebe verwendet wird und dass das Gewebe zum Bilden der glatten Oberfläche kalandriert wird.

8. Verfahren nach Anspruch 6 oder 7,
**dadurch gekennzeichnet,**
**dass** das Aufrauhen durch mechanische Bearbeitung, insbesondere durch Schleifen, Schaben oder Sandstrahlen erfolgt.

9. Verfahren nach einem der Anprüche 6 bis 8,
**dadurch gekennzeichnet,**
**dass** das Aufrauhen durch physikalische Bearbeitung, insbesondere durch Gammabestrahlung, Plasmabehandlung oder Laserapplikation erfolgt.

10. Verfahren nach einem der Ansprüche 6 bis 9,
**dadurch gekennzeichnet,**
**dass** das Aufrauhen durch chemische Bearbeitung, insbesondere durch Ätzen oder Aufpfropfen erfolgt.

11. Verfahren zur kuchenbildenden Filtration, bei dem ein Filterkuchen an einem Filtermedium angelagert und wieder entfernt wird,
**dadurch gekennzeichnet,**
**dass** ein Filtermedium nach einem der Ansprüche 1 bis 5 verwendet wird.

## Claims

1. Filter medium for the cake-forming filtration, wherein at least the side provided for the positioning of a filter cake has a substantially smooth surface,
**characterized in that**
the smooth surface is subsequently roughened for forming a micro-drain.

2. Filter medium according to claim 1,
**characterized in that**
it includes a textile fabric, a fleece, a felt or a membrane.

3. Filter medium according to claim 1 or 2,
**characterized in that**
a fabric having a smooth surface and a pore size of less than 25 micrometers, in particular less than 10 micrometers, is provided.

4. Filter medium according to any one of claims 1 to 3,
**characterized in that**
the side is calendered for forming the smooth surface.

5. Filter medium according to any one of claims 1 to 4,
**characterized in that**
the fabric is a double-layer fabric.

6. Method for producing a filter medium, in particular according to any one of claims 1 to 5, wherein the filter medium is produced having at least one substantially smooth surface provided for the positioning of the filter cake,
**characterized in that**
the smooth surface is roughened for forming a micro-drain.

7. Method according to claim 6,
**characterized in that**
a fabric is used as filter medium and **in that** the fabric is calendered for forming the smooth surface.

8. Method according to claim 6 or 7,
**characterized in that**
the roughening is effected by mechanical processing, in particular by grinding, scraping or sandblasting.

9. Method according to any one of claims 6 to 8,
**characterized in that**
the roughening is effected by physical processing, in particular by gamma radiation, plasma treatment or laser application.

10. Method according to any one of claims 6 to 9,
**characterized in that**
the roughening is effected by chemical processing, in particular by etching or grafting.

11. Method for the cake-forming filtration, in which a filter cake is positioned on a filter medium and removed again,
**characterized in that**
a filter medium according to any one of claims 1 to 5 is employed.

## Revendications

1. Milieu filtrant pour la filtration par formation de gâteau, au moins le côté qui est prévu pour le dépôt du gâteau de filtration présentant une surface essentiellement lisse,
***caractérisé en ce que*** la surface lisse est rendue rugueuse ultérieurement pour former un micro-drainage.

2. Milieu filtrant selon la revendication 1, ***caractérisé en ce que*** celui-ci présente un tissu textile, un voile, un feutre ou une membrane.

3. Milieu filtrant selon la revendication 1 ou 2, ***caractérisé en ce qu'**il* est prévu un tissu ayant la surface lisse et une taille de pores inférieure à 25 micromètres, en particulier inférieure à 10 micromètres.

4. Milieu filtrant selon l'une quelconque des revendications 1 à 3, ***caractérisé en ce que*** la face destinée à former la surface lisse est calandrée.

5. Milieu filtrant selon l'une quelconque des revendications 1 à 4, ***caractérisé en ce que*** le tissu est un tissu double couche.

6. Procédé de fabrication d'un milieu filtrant, en particulier selon l'une quelconque des revendications 1 à 5, dans lequel le milieu filtrant est fabriqué avec au moins une surface essentiellement lisse qui est prévue pour déposer le gâteau de filtration, ***caractérisé en ce que*** la surface lisse est rendue rugueuse pour former un micro-drainage.

7. Procédé selon la revendication 6, ***caractérisé en ce que*** l'on utilise un tissu comme milieu filtrant et ***en ce que*** le tissu est calandré pour former la surface lisse.

8. Procédé selon la revendication 6 ou 7, ***caractérisé en ce que*** la rugosité est obtenue par traitement mécanique, en particulier par ponçage, raclage ou sablage.

9. Procédé selon l'une quelconque des revendications 6 à 8, ***caractérisé en ce que*** la rugosité est obtenue par traitement physique, en particulier par rayonnement gamma, traitement plasma ou application d'un laser.

10. Procédé selon l'une quelconque des revendications 6 à 9, ***caractérisé en ce que*** la rugosité est obtenue par traitement chimique, en particulier par attaque chimique ou tamponnage.

11. Procédé de filtration par formation de gâteau, dans lequel un gâteau de filtration est déposé sur un milieu filtrant, puis retiré, ***caractérisé en ce que*** l'on utilise un milieu filtrant selon l'une quelconque des revendications 1 à 5.
